(19) **Europäisches Patentamt**

**European Patent Office**

**Office européen des brevets**

(11) **EP 1 147 514 B1**

(12) **EUROPEAN PATENT SPECIFICATION**

(45) Date of publication and mention
of the grant of the patent:
**06.04.2005 Bulletin 2005/14**

(51) Int Cl.$^7$: **G10L 19/02**, G10L 21/02

(21) Application number: **00975894.7**

(86) International application number:
**PCT/EP2000/010362**

(22) Date of filing: **19.10.2000**

(87) International publication number:
**WO 2001/037263 (25.05.2001 Gazette 2001/21)**

(54) **WIDEBAND AUDIO TRANSMISSION SYSTEM**

BREITBANDIGES AUDIO-ÜBERTRAGUNGSSYSTEM

SYSTEME DE TRANSMISSION AUDIO A LARGE BANDE

(84) Designated Contracting States:
**DE FR GB IT**

(30) Priority: **16.11.1999 EP 99203819**

(43) Date of publication of application:
**24.10.2001 Bulletin 2001/43**

(73) Proprietor: **Koninklijke Philips Electronics N.V.
5621 BA Eindhoven (NL)**

(72) Inventors:
• **SLUIJTER, Robert, J.**
**NL-5656 AA Eindhoven (NL)**
• **GERRITS, Andreas, J.**
**NL-5656 AA Eindhoven (NL)**
• **TAORI, Rakesh**
**NL-5656 AA Eindhoven (NL)**
• **CHENNOUKH, Samir**
**NL-5656 AA Eindhoven (NL)**

(74) Representative:
**Deguelle, Wilhelmus Hendrikus Gerardus
Philips
Intellectual Property & Standards
P.O. Box 220
5600 AE Eindhoven (NL)**

(56) References cited:
**EP-A- 0 648 024**       **US-A- 5 774 837**

• **SCHNITZLER J: "A 13.0 KBIT/S WIDEBAND
SPEECH CODEC BASED ON SB-ACELP" IEEE
INTERNATIONAL CONFERENCE ON
ACOUSTICS, SPEECH AND SIGNAL
PROCESSING, SEATTLE, WA, USA, vol. CONF.
23, 12 - 15 May 1998, pages 157-160,
XP000854539 IEEE, New York, NY, USA ISBN:
0-7803-4429-4**
• **TAORI R ET AL: "Hi-BIN: an alternative approach
to wideband speech coding" IEEE
INTERNATIONAL CONFERENCE ON
ACOUSTICS, SPEECH, AND SIGNAL
PROCESSING, ISTANBUL, TURKEY, vol. 2, 5 - 9
June 2000, pages 1157-1160 vol.2, XP002159325
IEEE, Piscataway, NJ, USA ISBN: 0-7803-6293-4**

**Description**

The invention relates to a transmission system comprising a transmitter which comprises a splitter for splitting up a transmission signal into a signal having a low frequency range and a signal having a high frequency range, and a first coding device for deriving a coded signal having a low frequency range from the signal having a low frequency range, which first coding device is arranged for transmitting the coded signal having a low frequency range to a receiver by a first transmission channel, the receiver comprising a first decoder for forming a reconstructed signal having a low frequency range based on the coded signal having a low frequency range, and a second coding device for deriving a coded signal having a high frequency range from the signal having a high frequency range, which second coding device is arranged for transmitting the coded signal having a high frequency range from the transmitter to the receiver by a second transmission channel, the receiver comprising a second decoder for forming a reconstructed signal having a high frequency range based on the coded signal having a high frequency range by using a noise signal coming from a noise signal source and a combiner for combining the reconstructed signal having a low frequency range and the reconstructed signal having a high frequency range.

The invention further relates to a transmitter, a receiver, a coding device, a decoder, a coding method and a decoding method to be used in a transmission system of such type.

Such a transmission system is known from EP 0 648 024 A1. This document describes a transmission system for audio signals in which the input signal is split up into spectral portions by a filter bank. These spectral portions are coded each by its own coding device, a sub-coder. In the sub-coder the envelope of a signal is determined and this envelope is compared with a number of reference envelopes. An identification code of the reference envelope corresponding best to the envelope is transmitted to a receiver.

In the receiver, a decoder reconstructs a signal on the basis of the identification code, the envelope of which signal corresponds to the received reference envelope, after which the envelope is multiplied by a noise signal coming from a noise source, which results in a reconstructed spectral portion of the input signal. Subsequently, these reconstructed spectral portions are combined to thus form a reconstruction of the input signal.

A disadvantage of such a transmission system is that the coding device needs to have considerable computation capacity for the splitting up of the input signal into spectral portions by a filter bank in the transmitter and the combining of the spectral portions in the receiver with the aid of a combiner.

It is an object of the invention to provide a transmission system as described in the opening paragraph, in which the necessary computation capacity is reduced. The invention is defined by the appended independent claims.

For this purpose, the transmission system according to the invention is characterized in that the second coding device comprises analysis means for determining prediction coefficients and for transmitting the prediction coefficients to the receiver and in that the second decoding device is arranged for filtering the noise signal coming from the noise signal source during the reconstruction of the signal having a high frequency range by means of an LPC synthesis filter which is controlled by the prediction coefficients.

The input signal is split up into two portions, so that an optimum coding for each of the two frequency ranges can be selected. The first coding device utilizes a known coding, which is efficient for a signal having a low frequency range, at an associated efficient bit rate. A low-pass filter is sufficient for this signal. The second coding device utilizes the Linear Predictive Coding (LPC) to code the signal having a high frequency range in an efficient manner. Thanks to the properties of the LPC coding, a high-pass filter is sufficient and it is not necessary to apply down-sampling. Since the high-pass filter and the low-pass filter both require little computation capacity, and a down-sampler is omitted, the total required computation capacity is reduced.

The human auditory system in this high frequency range is considerably less precise, so that it is possible during the reconstruction of the signal having a high frequency range, to take a white noise source as a signal source and subsequently filter the signal source with an LPC synthesis filter, so that a signal is obtained whose spectrum to the human auditory system sufficiently matches the original signal. Since it is avoided that the high frequency range is subdivided into smaller frequency ranges which are to be processed separately, the required computation capacity is reduced.

In US5,774,837 a speech coding system and method is disclosed in which a voicing probability parameter is determined. This voicing probability parameter is related to the relative content of voiced and unvoiced portions in the spectrum of an input speech signal. The voicing probability is used to split segments of the input speech signal into voiced and unvoiced portions. The voiced and unvoiced portions are encoded separately using different processing algorithms. The unvoiced portions are encoded by means of a modified linear prediction coding algorithm. Parameters representing both the voiced and unvoiced portions of the speech are combined in data packets for transmission. In the decoder, speech is synthesized from the transmitted parameters representing voiced and unvoiced portions of the speech. The unvoiced portions are reconstructed by selecting, dependent on the voicing probability, a noise excitation sequence from a codebook comprising a high pass filtered noise signal. The codebook entries are pre-computed noise sequences which represent a time-domain signal that corresponds to different unvoiced portions of the spectrum of a speech signal. The codebook entries can be obtained from an inverse Fourier transform of the portion of the spectrum determined to be unvoiced by obtaining the spectrum of a white noise signal and then computing the inverse transform of the remaining signal in which low frequency band components have been succesively removed. The selected noise excitation sequence is gain adjusted and passed through a synthesis filter having coefficients equal to the linear prediction coefficients determined in the encoder to reconstruct the unvoiced portions of the speech signal.

An embodiment of the transmission system according to the invention is characterized in that the second coding device in the transmitter is arranged for generating an amplification code based on the signal having a high frequency range and in that the second decoder in the receiver is arranged for utilizing the amplification codes during the reconstruction of the signal having a high frequency range.

Since the coding device determines an amplification code by which the decoder subsequently amplifies the reconstructed signal, the number of prediction coefficients required is reduced, so that determining the prediction coefficients becomes simpler and requires less computation capacity.

The frequency ranges can be determined.

The invention will be further described with reference to the Figures in which:

Fig. 1 shows a transmission system according to the invention,
Fig. 2 shows a transmitter according to the invention, and
Fig. 3 shows a receiver according to the invention.

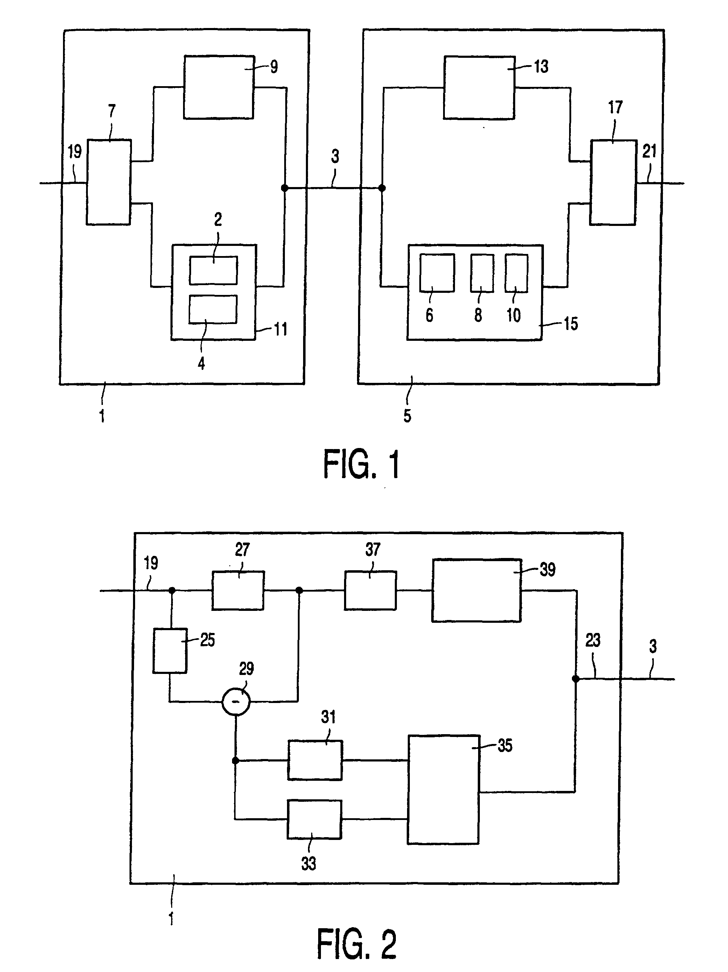

Fig. 1 diagrammatically shows a transmission system according to the invention.

The input signal arrives through an input 19 of a transmitter 1. A splitter 7 splits up the input signal into a signal that has a low frequency range and is processed by a first coder 9, and a signal that has a high frequency range and is processed by a second coder 11, the second coder 11 utilizing an LPC coder 2 and a signal strength meter 4. The coder 11 is an LPC coder which determines prediction coefficients of the signal that has a high frequency range. The coded signals appear on the output of the first coder 9 and the second coder 11 and are transmitted to a receiver 5 by a transmission channel 3. In this receiver 5 the coded signal having a low frequency range is processed by a first decoder 13 and the coded signal having a high frequency range is processed by a second decoder 15, while use is made of a noise signal source 6, an LPC synthesis filter 8 and an amplifier 10. The decoded signal having a low frequency range and the decoded signal having a high frequency range are then combined by a combiner 17 to an output signal that is rendered available on an output 21 of the receiver 5.

Fig. 2 shows an embodiment of a transmitter according to the invention. The input signal arrives through the input 19 of transmitter 1. The input signal is split up into two spectral portions, the signal having a low frequency range being the result of the processing of the input signal with the low-pass filter 27, and the signal having a high frequency range being the result of determining the difference between the signal having a low frequency range coming from the low-pass filter 27 and the input signal delayed by a delay element 25. The difference signal is determined by the subtracter 29. It is important for the low-pass filter 27 to have a linear phase characteristic. This may be achieved, for example, by using a finite impulse response filter having a length of 81 as a low-pass filter, so that the filtered signal is delayed by 40 samples. For speech may be chosen a passband frequency range between 0 and 3.4 kHz and a stop band from 4 to 8 kHz. The delay element 25 is used for compensating for the delay that occurs in the finite impulse response filter, so that the signals available at the subtracter 29 have the right phase relation.

The difference signal is then applied to a signal strength meter 31 which measures the signal strength of the difference signal and generates amplification codes in response thereto. The signal strength is determined for sub-frames having a length from 0.5 ... 10 ms of the signal having a high frequency range.

By means of a Hamming window h, the signal strength is determined based on the following formula

$$p_i = \frac{1}{80} \sum_{n=0}^{79} h[n].s^2[n]$$

where s is a 5 ms sub-frame and i the position in the frame. Four signal strengths are computed within one frame, thus $i = 1, 2, 3, 4$.

For quantization purposes, the four signal strengths are converted to a logarithmic domain.

$$l_i = 10\log_{10} p_i$$

where $i = 1,2,3,4$.

The first signal strength $I_1$ is quantized with four bits, whereas the last three signal strengths $I_2$ to $I_4$ are quantized differentially relative to the previously quantized signal strength with three bits.

The value of $I_1$ may be limited to a fixed range, for example, a range from -10 to 60 dB for 16-bit signals and is then quantized with 4 bits, which results in a quantized signal strength $I_1$ and an index $I_{l_1}$. The remaining signal strengths are quantized differentially:

$$\Delta_i = I_i - \hat{I}_{i-1}$$

This differential quantization $\Delta_i$ may be limited to a range from, for example, -6 dBm to +6 dBm. The index representing this differential quantization is $I_{l_1}$. The quantized signal strength $\hat{I}_i$ is to be determined to be able to compute $\Delta_{i+1}$:

$$\hat{I}_i = \hat{I}_{i-1} + \hat{\Delta}_i$$

The amplification codes comprise the indices $I_{l_1}$.

The decoder determines the quantized signal strengths in the same manner.

The difference signal is also applied to an LPC coder 33, which determines the prediction codes of the difference signal with the aid of an LPC analysis. The low frequency range in the difference signal is absent, so that downsampling of the signal is not necessary. When the signal having a high frequency range is reconstructed by an LPC synthesis filter, a frequency characteristic having a sufficiently low amplitude level arises of its own accord in the low frequency range. With the aid of a sixth-order LPC analysis, the six LPC coefficients can be determined of a 15 ms segment of the signal having a high frequency range. For determining these six LPC coefficients, the average value of the segment is determined and subtracted from the samples in the segment, after which a 240-dot Hamming window function is applied. Subsequently, the Levinson-Durbin recursion is applied to the autocorrelation function of the windowed signal. To avoid sharp resonances, bandwidth expansion is used for which an expansion factor of 0.98 can be used.

The six LPC coefficients are converted to Line Spectral Frequencies (LSF) $\omega[n]$ (n=0,1,2...,5) in preparation for vector quantization. The quantized LSFs are based on their sensitivity to quantization errors. The sensitivity increases as the distance between neighboring LSFs decreases.

This is used by utilizing a weighing function $\Phi$ :

$$\Phi[n] = \begin{cases} \dfrac{1}{\omega[1] - \omega[0]} & \text{If } n = 0 \\[3mm] \dfrac{1}{\omega[5] - \omega[4]} & \text{if } n = 5 \\[3mm] \dfrac{1}{\min(\omega[n] - \omega[n-1], \omega[n+1])} & \text{if } 1 \leq n \leq 4 \end{cases}$$

A single codebook c comprising 1024 predefined 6th-order LSF vectors is used for the vector quantizer, the LSF vectors being obtained by training the codebook c with the LBG algorithm.

For each element j of the codebook c the following distance function is evaluated:

$$D_j = \sum_{n=0}^{5} \Phi[n].(\omega[n] - c_j[n])^2$$

The index of the codebook element having the shortest distance is selected. This LSF codebook index is sent to the decoder.

The signal having a low frequency range coming from the low-pass filter 27 is down-sampled by a down-sampler 37 and applied to a narrow-band coder 39. This narrow-band coder 39 is a normal coder optimized for a signal having a low frequency range as described, for example, in ITU G.729 or G.728. The type or operation of this narrow-band coder 39 is unimportant to the implementation of the invention. The narrow-band coder 39 generates coded signals which, together with the amplification codes coming from the signal strength meter 31 and the coded signals coming from the LPC coder 33, are available on an output 23 of the transmitter 1 for further processing.

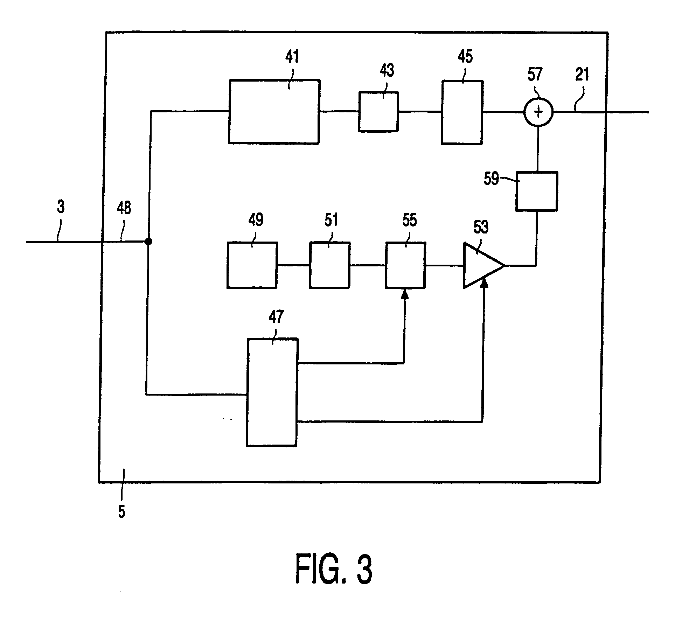

Fig. 3 shows an embodiment of a receiver according to the invention.

The coded signals arriving through an input 48 of the transmission channel are applied to a narrow-band decoder 41 and a decoder 47, while each decoder processes the coded signals and amplification codes intended for it.

By means of the narrow-band coder 41 a reconstructed signal having a low frequency range is recovered from the coded signal having a low frequency range after which up-sampling takes place by an up-sampler 43. To avoid undesired signals in the high frequency range, which may be developed during decoding or up-sampling, the reconstructed signal, after up-sampling, is filtered by a low-pass filter 45 which has a frequency characteristic that can be compared with the low-pass filter 27 in the transmitter.

The coded signal having a high frequency range and the amplification codes are converted by a decoder 47 into control signals for an LPC synthesis filter 55 and for an amplifier 53 by which the frequency characteristic and signal strength of the reconstructed signal can be adapted.

A noise source 49 produces a white noise signal. The white noise signal includes noise segments of 80 samples in length, which are generated by a random pulse generator having a uniform random pulse distribution. This noise signal is processed by a sixth-order Infinite Impulse Response high-pass filter 51 that has a 3500 Hz cut-off frequency, so that a filtered noise signal arises which has a frequency range that is comparable to the frequency range of the signal having a high frequency range.

The amplitude spectrum of the filtered noise signal coming from the high-pass filter 51 is adapted by an LPC synthesis filter 55 to the amplitude spectrum of the signal having a high frequency range. The LPC parameters necessary for setting the LPC synthesis filter 55 are obtained by selecting the right LSFs from the codebook with the aid of a received LPC codebook index and converting these LSFs into LPC parameters.

During the reconstruction of the signal having a high frequency range by an LPC synthesis filter, an amplitude spectrum having a sufficiently low amplitude level will arise of its own accord in the low frequency range.

The filtered noise signal coming from the LPC synthesis filter 55 is amplified by the amplifier 53, which is set to the indices in the received amplification codes. This achieves that the signal strength of the reconstructed signal having a high frequency range is adapted to the signal strength of the signal having a high frequency range. The signal strength is indicated in the amplification code by the received indices $I_{I_1}$ (i = 1,....,4). The indices are decoded and then converted from the logarithmic domain to the linear domain:

$$\hat{p}_i = \frac{\hat{I}_I}{10}$$

The filtered noise signal is subdivided into 5 ms sub-frames. Per sub-frame $s'$ the signal strength is determined:

$$p_i' = \frac{1}{80} \sum_{n=0}^{79} h[n] s'^2[n]$$

where h is a Hamming window.

The scale factor $g_i$ for the sub-frame I is determined as follows:

$$g_i = \sqrt{\frac{\hat{p}_i}{p_i}}$$

The segments of the noise signal are scaled, that is to say, amplified by a factor $g_i$ and, with an overlap, combined to form the high frequency reconstructed signal.

Since it is possible for various signal delays to arise during the reconstruction of the signal having a high frequency range and the signal having a low frequency range, a delay element 59 is provided for delaying the signal coming from the amplifier 53. In the case where the signal having a low frequency range experiences less delay than the signal having a high frequency range, the delay element 59 may be inserted between the low-pass filter 45 and the combiner 57.

The reconstructed signal having a low frequency range coming from the low-pass filter 45, and the reconstructed signal having a high frequency range coming from the delay element 59 are combined by a combiner 57 to an output signal that is rendered available on an output 21 of the receiver. Since the frequency characteristic of the reconstructed signal having a low frequency range and the reconstructed signal having a high frequency range shows little overlap, the output signal having a complete frequency range can be obtained by simply adding up the two reconstructed signals.

**Claims**

1. A transmission system comprising:

   - a transmitter (1) which comprises:

     - a splitter (7) for splitting up a transmission signal into a signal having a low frequency range and a signal having a high frequency range, and
     - a first coding device (9) for deriving a coded signal having a low frequency range from the signal having a low frequency range, which first coding device (9) is arranged for transmitting the coded signal having a low frequency range to a receiver (5) by a first transmission channel,
     - a second coding device (11) for deriving a coded signal having a high frequency range from the signal having a high frequency range, which second coding device (11) is arranged for transmitting the coded signal having a high frequency range from the transmitter to the receiver (5) by a second transmission channel, the second coding device (11) comprising analysis means (33) for determining prediction coefficients and for transmitting the prediction coefficients to the receiver (5),

   - the receiver (5) comprising:

     - a first decoder (13) for forming a reconstructed signal having a low frequency range based on the coded signal having a low frequency range, and
     - a second decoder (15) for forming a reconstructed signal having a high frequency range based on the coded signal having a high frequency range by using a noise signal coming from a noise signal source (49), the second decoder (15) being arranged for filtering the noise signal coming from the noise signal source (49) during the reconstruction of the signal having a high frequency range by means of an LPC synthesis filter (55) which is controlled by the prediction coefficients, and
     - a combiner (17) for combining the reconstructed signal having a low frequency range and the reconstructed signal having a high frequency range,

   **characterised in that** the noise signal source (49) is a white noise source and **in that** the noise signal is a white noise signal.

2. A transmission system as claimed in claim 1, **characterised in that** the second coding device (11) in the transmitter (1) is arranged for generating an amplification code based on the signal having a high frequency range and **in that** the second decoder (15) in the receiver (5) is arranged for utilizing the amplification codes during the reconstruction of the signal having a high frequency range.

3. A transmission system as claimed in claim 1 or 2, **characterised in that** the receiver (5) is only arranged for processing the signal having a low frequency range.

4. A receiver (5) comprising:

   - a first decoder (13) for forming a reconstructed signal having a low frequency range based on a coded signal having a low frequency range, and
   - a second decoder (15) for forming a reconstructed signal having a high frequency range based on a coded signal having a high frequency range by using a noise signal coming from a noise signal source (49), the second decoder (15) being arranged for filtering the noise signal coming from the noise signal source (49) during the reconstruction of the signal having a high frequency range by means of an LPC synthesis filter (55) which is controlled by prediction coefficients, and

- a combiner (17) for combining the reconstructed signal having a low frequency range and the reconstructed signal having a high frequency range,

**characterised in that** the noise signal source (49) is a white noise source and **in that** the noise signal is a white noise signal.

5. A decoding device comprising:

- a first decoder (13) for forming a reconstructed signal having a low frequency range based on a coded signal having a low frequency range, and
- a second decoder (15) for forming a reconstructed signal having a high frequency range based on a coded signal having a high frequency range by using a noise signal coming from a noise signal source (49), the second decoder (15) being arranged for filtering the noise signal coming from the noise signal source (49) during the reconstruction of the signal having a high frequency range by means of an LPC synthesis filter (55) which is controlled by prediction coefficients, and
- a combiner (17) for combining the reconstructed signal having a low frequency range and the reconstructed signal having a high frequency range,

**characterised in that** the noise signal source (49) is a white noise source and **in that** the noise signal is a white noise signal.

6. A method of decoding a coded signal, the method comprising:

- forming a reconstructed signal having a low frequency range based on a coded signal having a low frequency range, and
- forming a reconstructed signal having a high frequency range based on a coded signal having a high frequency range by using a noise signal coming from a noise signal source (49) and by filtering the noise signal coming from the noise signal source (49) during the reconstruction of the signal having a high frequency range by means of an LPC synthesis filter (55) which is controlled by prediction coefficients, and
- combining the reconstructed signal having a low frequency range and the reconstructed signal having a high frequency range,

**characterised in that** the noise signal source (49) is a white noise source and **in that** the noise signal is a white noise signal.

**Patentansprüche**

1. Übertragungssystem, das die nachfolgenden Elemente umfasst:

- einen Sender (1), der die nachfolgenden Elemente umfasst:

-- einen Signalsplitter (7) zum Aufteilen eines Übertragungssignals in ein Signal mit einem NF-Bereich und ein Signal mit einem HF-Bereich, und
-- eine erste Codieranordnung (9) zum Herleiten eines codierten Signals mit einem NF-Bereich von dem Signal mit einem NF-Bereich, wobei diese erste Codieranordnung (9) dazu vorgesehen ist, das Codierte Signal mit einem NF-Bereich zu einem Empfänger (5) über einen ersten Übertragungskanal zu übertragen,
-- eine zweite Codieranordnung (11) zum Herleiten eines codierten Signals mit einem HF-Bereich von dem Signal mit einem HF-Bereich, wobei diese zweite Codieranordnung (11) dazu vorgesehen ist, das codierte Signal mit einem HF-Bereich über einen zweiten Übertragungskanal von dem Sender zu dem Empfänger (5) zu übertragen, wobei die zweite Codieranordnung (11) Analysiermittel (33) aufweist zum Ermitteln von Prädiktionskoeffizienten und zum Übertragen der Prädiktionskoeffizienten zu dem Empfänger (5),

- einen Empfänger (5), der die nachfolgenden Elemente umfasst:

-- einen ersten Decoder (13) zum Bilden eines rekonstruierten Signals mit einem NF-Bereich auf Basis des codierten Signals mit einem NF-Bereich, und

-- einen zweiten Decoder (15) zum Bilden eines rekonstruierten Signals mit einem HF-Bereich auf Basis des codierten Signals mit einem HF-Bereich, durch Verwendung eines Rauschsignals, das von einer Rauschsignalquelle (49) herrührt, wobei der zweite Decoder (15) dazu vorgesehen ist, das von der Rauschsignalquelle (49) herrührende Rauschsignal während der Rekonstruktion des Signals mit einem HF-Bereich mit Hilfe eines LPC-Synthesefilters (55) zu filtern, wobei dieses Filter durch die Prädiktionskoeffizienten gesteuert wird, und

-- eine Kombinierschaltung (17) zum Kombinieren des rekonstruierten Signals mit einem NF-Bereich und des rekonstruierten Signals mit einem HF-Bereich,

**dadurch gekennzeichnet, dass** die Rauschsignalquelle (49) eine weiße Rauschquelle ist und dass das Rauschsignal ein weißes Rauschsignal ist.

2. Übertragungssystem nach Anspruch 1, **dadurch gekennzeichnet, dass** die zweite Codieranordnung (11) in dem Sender ( 1 ) dazu vorgesehen ist, einen Verstärkungscode zu erzeugen, und zwar auf Basis des Signals mit einem HF-Bereich, und dass der zweite Decoder (15) in dem Empfänger (5) dazu vorgesehen ist, die Verstärkungscodes während der Rekonstruktion des Signals mit einem HF-Bereich zu benutzen.

3. Übertragungssystem nach Anspruch 1 oder 2, **dadurch gekennzeichnet, dass** der Empfänger (5) nur zum Verarbeiten des Signals mit einem NF-Bereich vorgesehen ist.

4. Empfänger (5), der die nachfolgenden Elemente aufweist:

- einen ersten Decoder (13) zum Bilden eines rekonstruierten Signals mit einem NF-Bereich auf Basis eines codierten Signals mit einem NF-Bereich, und
- einen zweiten Decoder (15) zum Bilden eines rekonstruierten Signals mit einem HF-Bereich auf Basis eines codierten Signals mit einem HF-Bereich durch Verwendung eines Rauschsignals, das von einer Rauschsignalquelle (49) herrührt, wobei der zweite Decoder (15) dazu vorgesehen ist, das von der Rauschsignalquelle (49) herrührende Rauschsignal während der Rekonstruktion des Signals mit einem HF-Bereich mit Hilfe eines LPC-Synthesefilters (55) zu filtern, das durch Prädiktionskoeffizienten gesteuert wird, und
- eine Kombinierschaltung (17) zum Kombinieren des rekonstruierten Signals mit einem NF-Bereich und des rekonstruierten Signals mit einem HF-Bereich,

**dadurch gekennzeichnet, dass** die Rauschsignalquelle (49) eine weiße Rauschquelle ist und dass das Rauschsignal ein weißes Rauschsignal ist.

5. Decodieranordnung, welche die nachfolgenden Elemente umfasst:

- einen ersten Decoder (13) zum Bilden eines rekonstruierten Signals mit einem NF-Bereich auf Basis eines codierten Signals mit einem NF-Bereich, und
- einen zweiten Decoder (15) zum Bilden eines rekonstruierten Signals mit einem HF-Bereich auf Basis eines codierten Signals mit einem HF-Bereich, durch Verwendung eines Rauschsignals von einer Rauschsignalquelle (49), wobei der zweite Decoder (15) dazu vorgesehen ist, das Rauschsignal, das von der Rauschsignalquelle (49) herrührt, während der Rekonstruktion des Signals mit dem HF-Bereich mit Hilfe eines LPC-Synthesefilters (55) zu filtern, das durch Prädiktionskoeffizienten gesteuert wird, und
- eine Kombinierschaltung (17) zum Kombinieren des rekonstruierten Signals mit einem NF-Bereich und des rekonstruierten Signals mit einem HF-Bereich,

**dadurch gekennzeichnet, dass** die Rauschsignalquelle (49) eine weiße Rauschquelle ist und dass das Rauschsignal ein weißes Rauschsignal ist.

6. Verfahren zum Decodieren eines codierten Signals, wobei dieses Verfahren die nachfolgenden Verfahrensschritte umfasst:

- das Bilden eines rekonstruierten Signals mit einem NF-Bereich auf Basis eines codierten Signals mit einem NF-Bereich, und
- das Bilden eines rekonstruierten Signals mit einem HF-Bereich auf Basis eines codierten Signals mit einem HF-Bereich durch Verwendung eines von einer Rauschsignalquelle (49) herrührenden Rauschsignals und durch Filterung des von der Rauschsignalquelle (49) herrührenden Rauschsignals während der Rekonstruktion des Signals mit einem HF-Bereich mit Hilfe eines LPC-Synthesefilters (55), das durch Prädiktionskoeffizienten gesteuert wird, und

- das Kombinieren des rekonstruierten Signals mit einem NF-Bereich und des rekonstruierten Signals mit einem HF-Bereich,

**dadurch gekennzeichnet, dass** die Rauschsignalquelle (49) eine weiße Rauschquelle ist und dass das Rauschsignal ein weißes Rauschsignal ist.

**Revendications**

1. Système de transmission comprenant

- un émetteur (1) qui comporte :

  - un séparateur (7) destiné à séparer un signal de transmission en un signal présentant une gamme de basses fréquences et un signal présentant une gamme de hautes fréquences, et
  - un premier dispositif de codage (9) destiné à dériver un signal codé présentant une gamme de basses fréquences à partir du signal présentant une gamme de basses fréquences, lequel premier dispositif de codage (9) est apte à transmettre le signal codé présentant une gamme de basses fréquences à un récepteur (5) par un premier canal de transmission,
  - un second dispositif de codage (11) destiné à dériver un signal codé présentant une gamme de hautes fréquences à partir du signal présentant une gamme de hautes fréquences, lequel second dispositif de codage (11) est apte à transmettre le signal codé présentant une gamme de hautes fréquences de l'émetteur au récepteur (5) par un second canal de transmission, le second dispositif de codage (11) comprenant un moyen d'analyse (33) destiné à déterminer des coefficients de prédiction et à transmettre les coefficients de prédiction au récepteur (5),

- le récepteur (5) comprenant :

  - un premier décodeur (13) destiné à former un signal reconstitué présentant une gamme de basses fréquences sur la base du signal codé présentant une gamme de basses fréquences, et
  - un second décodeur (15) destiné à former un signal reconstitué présentant une gamme de hautes fréquences sur la base du signal codé présentant une bande HF en utilisant un signal de bruit provenant d'une source de signaux de bruit (49), le second décodeur (15) étant apte au filtrage du signal de bruit provenant de la source de signaux de bruit (49) durant la reconstitution du signal présentant une gamme de hautes fréquences au moyen d'un filtre de synthèse LPC (55) qui est commandé par les coefficients de prédiction, et
  - un dispositif de combinaison (17) destiné à combiner le signal reconstitué présentant une gamme de basses fréquences et le signal reconstitué présentant une gamme de hautes fréquences,

**caractérisé en ce que** la source de signaux de bruit (49) est une source de bruit blanc, et **en ce que** le signal de bruit est un signal de bruit blanc.

2. Système de transmission suivant la revendication 1, **caractérisé en ce que** le second dispositif de codage (11) dans l'émetteur (1) est apte à générer un code d'amplification sur la base du signal présentant une gamme de hautes fréquences, et **en ce que** le second décodeur (15) dans le récepteur (5) est apte à utiliser les codes d'amplification pendant la reconstitution du signal présentant une gamme de hautes fréquences.

3. Système de transmission suivant la revendication 1 ou 2, **caractérisé en ce que** le récepteur (5) est uniquement apte à traiter le signal présentant une gamme de basses fréquences.

4. Récepteur (5) comprenant :

- un premier décodeur (13) destiné à former un signal reconstitué présentant une gamme de basses fréquences sur la base du signal codé présentant une gamme de basses fréquences, et
- un second décodeur (15) destiné à former un signal reconstitué présentant une gamme de hautes fréquences sur la base d'un signal codé présentant une bande HF en utilisant un signal de bruit provenant d'une source de signaux de bruit (49), le second décodeur (15) étant apte au filtrage du signal de bruit provenant de la source de signaux de bruit (49) durant la reconstitution du signal présentant une gamme de hautes fréquences au moyen d'un filtre de synthèse LPC (55) qui est commandé par des coefficients de prédiction, et

- un dispositif de combinaison (17) destiné à combiner le signal reconstitué présentant une gamme de basses fréquences et le signal reconstitué présentant une gamme de hautes fréquences,

**caractérisé en ce que** la source de signaux de bruit (49) est une source de bruit blanc, et **en ce que** le signal de bruit est un signal de bruit blanc.

5. Dispositif de décodage comprenant :

- un premier décodeur (13) destiné à former un signal reconstitué présentant une gamme de basses fréquences sur la base du signal codé présentant une gamme de basses fréquences, et
- un second décodeur (15) destiné à former un signal reconstitué présentant une gamme de hautes fréquences sur la base d'un signal codé présentant une bande HF en utilisant un signal de bruit provenant d'une source de signaux de bruit (49), le second décodeur (15) étant apte au filtrage du signal de bruit provenant de la source de signaux de bruit (49) durant la reconstitution du signal présentant une gamme de hautes fréquences au moyen d'un filtre de synthèse LPC (55) qui est commandé par des coefficients de prédiction, et
- un dispositif de combinaison (17) destiné à combiner le signal reconstitué présentant une gamme de basses fréquences et le signal reconstitué présentant une gamme de hautes fréquences,

**caractérisé en ce que** la source de signaux de bruit (49) est une source de bruit blanc, et **en ce que** le signal de bruit est un signal de bruit blanc.

6. Procédé de décodage d'un signal codé, le procédé comprenant :

- la formation d'un signal reconstitué présentant une gamme de basses fréquences sur la base d'un signal codé présentant une gamme de basses fréquences, et
- la formation d'un signal reconstitué présentant une gamme de hautes fréquences sur la base d'un signal codé présentant une bande HF en utilisant un signal de bruit provenant d'une source de signaux de bruit (49) et en filtrant le signal de bruit provenant de la source de signaux de bruit (49) durant la reconstitution du signal présentant une gamme de hautes fréquences au moyen d'un filtre de synthèse LPC (55) qui est commandé par des coefficients de prédiction, et
- la combinaison du signal reconstitué présentant une gamme de basses fréquences et du signal reconstitué présentant une gamme de hautes fréquences,

**caractérisé en ce que** la source de signaux de bruit (49) est une source de bruit blanc, et **en ce que** le signal de bruit est un signal de bruit blanc.

FIG. 1

FIG. 2

FIG. 3